# EUROPEAN PATENT APPLICATION

(11) **EP 4 331 694 A1**
(43) Date of publication of application: **06.03.2024**
(21) Application number: 23191670.1
(22) Date of filing: 16.08.2023
(51) Int. Cl.: A63F 13/424, A63F 13/54, A63F 13/87, G06F 3/16, G10L 15/22, G10L 21/003

(54) **SPEECH ASSISTANCE APPARATUS AND METHOD**

(30) Priority: 30.08.2022 GB 202212520
(71) Applicant: Sony Interactive Entertainment Inc., Tokyo 108-0075 (JP)
(72) Inventor: BARCIAS, Jesus Lucas, London, W1F 7LP (GB); HENDERSON, Christopher, London, W1F 7LP (GB); MICHAILIDIS, Lazaros, London, W1F 7LP (GB)
(74) Representative: D Young & Co LLP

(57) **Abstract**

An apparatus for assisting at least a first user in communicating with one or more other users via a network, the apparatus comprising: a storage unit configured to store: phrase data corresponding to one or more phrases, wherein each phrase comprises one or more words, tag data corresponding to one or more tags, wherein each tag comprises at least part of one word, and first association data corresponding to one or more associations between one or more of the phrases and one or more of the tags; an input unit configured to receive one or more audio signals from the at least first user; a recognition unit configured to recognise one or more spoken words comprised within the received audio signals; an evaluation unit configured to evaluate whether a given recognised spoken word corresponds to a given tag; and if so, a transmission unit configured to transmit one or more of the phrases associated with the given tag to one or more of the other users.

## Description

### Field of Invention

The present invention relates to a speech assistance apparatus and method.

### Background

The popularity of multi-player video games has increased in recent years. Such multi-player video games allow users to connect with other users while completing certain achievements or challenges within the video game. For example, in order to complete certain achievements or challenges within a multi-player video game, two or more users may need to co-operate with each other. For example, the two or more users may need to help each other in order to overcome a certain obstacle or defeat a mutual enemy. In other examples, completing certain achievements or challenges may require the two or more users to compete with each other. For example, the two or more users may be split into two or more teams, and the challenge is to obtain more points, kills, goals, etc. than the other team(s).

While playing a multi-player video game, users may communicate with each other either to discuss strategies for completing a certain achievement or challenge, or for social interaction and camaraderie. This is typically achieved using communication methods such as Voice over Internet Protocol (VoIP), or the like, which enable users to talk to each other during gameplay. However, certain users may find communicating with other users in this manner difficult due to, say, speech issues, cognitive issues, not being able to speak fluently in the language being used to communicate, or the like. As a result, these users may find in-game communication inaccessible, which in turn may make them feel socially isolated during gameplay.

The present invention seeks to alleviate or mitigate this issue.

### Summary of the Invention

In a first aspect, an apparatus for assisting at least a first user in communicating with one or more other users via a network is provided in claim 1.

In another aspect, a method of assisting at least a first user in communicating with one or more other users via a network is provided in claim 6.

Further respective aspects and features of the invention are defined in the appended claims.

Embodiments of the present invention will now be described by way of example with reference to the accompanying drawings, in which:
- Figure 1 schematically illustrates an entertainment system operable as a speech assistance apparatus according to embodiments of the present description;
- Figure 2 schematically illustrates a speech assistance apparatus according to embodiments of the present description;
- Figure 3 schematically illustrates a speech assistance apparatus according to embodiments of the present description;
- Figure 4 schematically illustrates a speech assistance method according to embodiments of the present description; and
- Figure 5 schematically illustrates a speech assistance method according to embodiments of the present description.

### Description of the Embodiments

A speech assistance apparatus and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, an entertainment system is a non-limiting example of such a speech assistance apparatus.

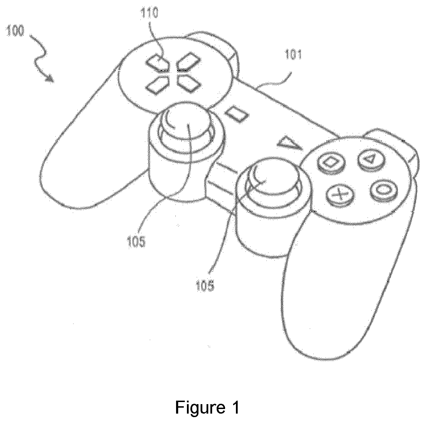

Referring to Figure 1, an example of an entertainment system 10 is a computer or console such as the Sony ^{®} PlayStation 5 ^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 80, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

As mentioned previously, certain users may find communicating with others users difficult for various reasons, such as speech issues, cognitive issues, or an inability to fluently speak the language in which the other users are conversing, or the like. For example, there may be certain phrases that a first user has difficulty in saying. In the context of a video game being played by the first user, such phrases may be important.

As a non-limiting example, the first user may be playing a first person shooter (FPS) video game, and is currently playing in the video game's *team deathmatch* (TDM) mode, where players are separated into two teams, and the two teams are pitted against each other, the winning team being the team with the most kills by the end of the match. At a certain point in the game, the first user may have noticed that a small number of enemies are trying to flank the first user's team. The first user may find the word "flank" difficult, if not impossible, to say, for example, and so cannot provide adequate warning to their teammates. The first user may thus feel frustrated, socially isolated, unhelpful, or the like, leading to dissatisfaction with their gaming experience. It should be noted that embodiments of the present description need not be limited to use during/within gameplay of a video game (in, say, in-game VoIP, for example), but may also be used in other communication networks, such as social media, videoconferencing, chat rooms, virtual reality experiences such as the metaverse, telephony, VoIP not associated with a video game, and the like.

Therefore, and as will be appreciated by persons skilled in the art, embodiments of the present description seek to assist those users that find communicating with other users difficult.

### Speech assistance apparatus

The aforementioned problem of certain users having difficulty in communicating with other users can be alleviated or mitigated by implementing means to transmit, via a network (such as VoIP, instant messaging, social media, chat rooms, or the like), phrases comprising words that are difficult for a first user to say, these phrases essentially being sent on behalf of the first user. Furthermore, means to receive audio (voice) signals from the first user are implemented, as well as means to determine, based on the received audio signals, which of the phrases should be transmitted (and, optionally, to which of the other users the phrases should be transmitted).

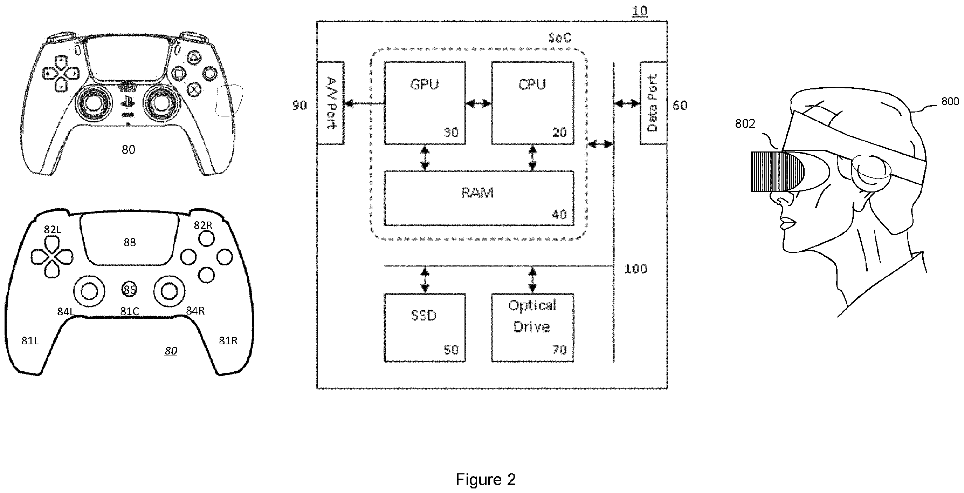

Accordingly, turning now to figure 2, in embodiments of the present description, an apparatus 200 to assist at least a first user in communicating with one or more other users via a network, the apparatus comprises: storage unit 202 configured to store: phrase data corresponding to one or more phrases, wherein each phrase comprises one or more words, tag data corresponding to one or more tags, wherein each tag comprises at least part of one word, and first association data corresponding to one or more associations between one or more of the phrases and one or more of the tags; input unit 204 configured to receive one or more audio signals from the at least first user; recognition unit 206 configured to recognise one or more spoken words comprised within the received audio signals; evaluation unit 208 configured to evaluate whether a given recognised spoken word corresponds to a given tag; and if so, transmission unit 210 configured to transmit one or more of the phrases associated with the given tag to one or more of the other users.

As previously mentioned, in embodiments of the present description, speech assistance apparatus 200 may be an entertainment device 10 such as a computer, a video game console, or the like. Turning back to the non-limiting TDM example, the first user, wishing to warn their teammates that some of the enemies are attempting a flank, may now be able to do so by saying a (part of a) word that is relatively easier for them to say than the phrase "the enemies are flanking", for example. Such a (part of a) word may or may not be semantically related to the phrase to be transmitted. In any case, storage unit 202 stores data relating to the phrase "the enemies are flanking", the (part of the) word that must be spoken by the first user (hereinafter referred to as a "tag"), and an association therebetween. The association between the phrase and tag is such that when the first user says the tag, the phrase (say, "the enemies are flanking") associated with that tag is subsequently transmitted to the other users.

Subsequently, input unit 204 receives audio signals from the first user, by using, say, a microphone (or some other transducer) located proximate to the first user, or the like. Recognition unit 206 recognises the spoken words comprised within the audio signals by using, say, speech recognition softwares, algorithms, or the like. Once the spoken words have been recognised, evaluation unit 208 evaluates whether any of the recognised spoken words corresponds to any of the tags. In the event that, say, a recognised spoken word of "one" corresponds to the tag of "one" (or "1"), transmission unit 210 subsequently transmits the phrase "the enemies are flanking" to one or more of the other users, such phrase being associated with the tag of "one" (or "1") by virtue of the data stored in storage unit 202, for example.

As will be appreciated by persons skilled in the art, the received audio signals comprise words spoken by the first user; such spoken words may be relatively easier for the user to say than those phrases which are to be transmitted on the first user's behalf. Thus, embodiments of the present description essentially make verbal communication easier for those users that have difficulty in doing so, as such users may use words and/or phrases that they find easier to say in order to transmit, to the other users, those words and/or phrases that they find more difficult to say.

### Phrase data, tag data, association data

In embodiments of the present description, it is desirable to predefine or ascertain which words/phrases are relatively easier for the first user to say, and which words/phrases are relatively more difficult for the first user to say. Moreover, it is desirable to ascertain which of the "easier" words/phrases to be spoken by the first user will be used to trigger the transmission of "more difficult" words/phrases to the other users on the first user's behalf.

Therefore, in embodiments of the present description, storage unit 202 (which may be a system memory such as RAM 40, ROM, or the like, and/or a storage memory such as HDD, SSD 50, CD, Floppy Disk, or the like) is configured to store:
- phrase data corresponding to one or more phrases, wherein each phrase comprises one or more words,
- tag data corresponding to one or more tags, wherein each tag comprises at least part of one word, and
- first association data corresponding to one or more associations between one or more of the phrases and one or more of the tags.

As will be appreciated by persons skilled in the art, the phrase data may thus comprise the "more difficult" words/phrases that are to be transmitted to other users on the first user's behalf, the tag data may comprise the "easier" words/phrases that, when spoken by the first user, will trigger the transmission of one or more of the "more difficult" words/phrases associated with the tag (that is, the "easier" word/phrase), and the first association data comprises information regarding the associations therebetween (that is, which "easier" word/phrase triggers the transmission of which "more difficult" words/phrases). It should be noted that while a given tag may comprise more than one word, such tags may make the use of speech assistance apparatus 200 more difficult for the first user; a tag with greater verbosity may be more likely to comprise (parts of) words that the first user finds more difficult to say. Hence, in embodiments of the present description, it is preferable to minimise the number of words in a tag, or even employ parts of words (such as individual syllables, individual phonemes, or the like). Moreover, to increase the ease of use of speech assistance apparatus 200, it may be advantageous to employ words such as the names of numbers ("one", "two", "three", and so on), the names of colours ("red", "orange", "yellow", and so on), the names of shapes ("square", "circle", "cross", and so on), and/or the names of letters ("A", "B", "C", and so on), as such words enable a more systematic way of creating/storing/modifying tags. Furthermore, in order to make storing such words as tag data in storage unit 202 more efficient, it may be beneficial to utilise symbols/graphemes that correspond to such words. For example, the grapheme "1" may be stored as part of the tag data instead of the word "one", the symbol "□" may be stored instead of the word "square", and the like. This way, the amount of memory in storage unit 202 being used to store tags may be reduced, thereby allowing a greater number of tags to be stored.

In embodiments of the present description, at least some of the phrase data, tag data and/or first association data may be predefined. For example, prior to use of speech assistance apparatus 200 by the first user, storage unit 202 may already have stored therein predefined phrase data, tag data and association data, an example of which being represented by Table 1 below. It should be noted that in this non-limiting example, the tag(s) and phrase(s) comprised within a given row of Table 1 are associated with each other. Moreover, and as will become apparent, Table 1 comprises phrases that are related to the aforementioned FPS game example. However, it will be appreciated by persons skilled in the art that the phrases need not be related to a video game *per* se; phrases such as "hello", "how are you?", "what's your name?", "my name is Eden Birch", or any other phrases related to any other topic of conversation, may also be associated with tags.

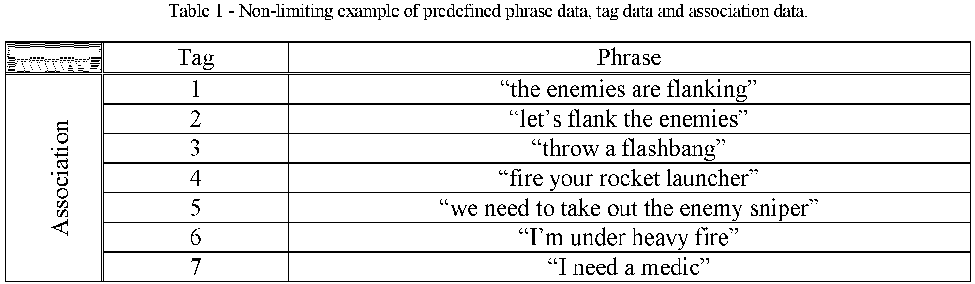

Alternatively, at least some of the phrase data, tag data and/or first association data may be generated by the first user via, say, a user input device such as a video game controller, keyboard, mouse, or the like, which may be received by input unit 204 (which may be one or more data ports 60, for example), so as to ascertain what words the user considers easier to say. As a non-limiting example, the first user may generate a plurality of tags (where, for example, some of the tags comprise the names of the colours, and some of the tags comprise the names of shapes), a plurality of phrases (where, for example, some of the phrases relate to conversations about the weather, and some of the phrases relate to the aforementioned FPS game), and a plurality of associations (where, for example, each "colour" tag is associated with one or more "weather" phrases, and each "shape" tag is associated with one or more "FPS game" phrases).

Hence, embodiments of the present description may comprise a generating unit, which may be one or more CPUs 20 and/or GPUs 30, and which may be configured to generate, responsive to one or more user inputs, one or more of the phrase data, tag data, and first association data, where input unit 204 may be configured to receive the user inputs.

Optionally, the predefined data (or user-provided data) may be modified/adapted by the first user via their user input device. For example, the first user may wish to add a tag of "8" and a phrase (associated to that tag) of "destroy that enemy tank" to the data represented by Table 1. In another example, the first user may, using their user input device, modify the data represented by Table 1 such that the phrase associated with the tag of "3" is now "throw a frag grenade". As another example, the first user may find the number "seven" difficult to say, and so may modify, using their input device, the tag associated with the phrase "I need a medic" such that it is now "med" (that is, a part of the word "medic"). As yet another example, the first user may modify, using their input device, the associations between the tags and phrases such that the tag of "1" is associated with the phrases "the enemies are flanking" and "I'm under heavy fire".

Hence, embodiments of the present description may comprise an adapting unit, which may be one or more CPUs 20 and/or GPUs 30, and which may be configured to adapt, responsive to one or more user inputs, one or more of the phrase data, tag data, and first association data, where input unit 204 may be configured to receive the user inputs.

As will be noted from the above discussion, more than one phrase may be associated with a given tag, and *vice versa.* Such one-to-many associations shall be discussed in greater detail later herein.

Optionally, storage unit 202 may be configured to store:
- command data corresponding to one or more commands, wherein each command comprises an indication of a respective subset of the other users, and
- second association data corresponding to one or more associations between one or more of the commands and one or more of the tags.

As will be appreciated by persons skilled in the art, the command data may thus serve as a way to specify the recipients of the phrases to be transmitted, and can be thus thought of as a command to transmit the phrase to only the specified recipients (responsive to the appropriate tag being spoken by the first user). As a non-limiting example, a given command may comprise, say, IP addresses of one or more other users' computers/entertainment devices/other client devices, or information regarding one or more other users' gaming profiles/videoconferencing accounts/social media accounts/other online user accounts, or the like. The tags may or may not be related to the commands (that is, the indication of the recipients of the phrases). As a non-limiting example, a given tag may be of a given other user's name (for example, "Eden"), whereas another given tag may be the name of a number (for example, "ten" or "10"). The second association data can be thought of as being analogous to the first association data; phrase(s) may be transmitted to only specific subsets of other users in response to tags associated with those specific subsets being spoken by the first user.

Turning back to the TDM example, the first user, wishing to warn their teammates of the enemy flank, may say the words "one" and "friends" into their microphone/transducer, which may subsequently trigger the transmission of the phrase "the enemies are flanking" (which in this example is associated with the tag "one" or "1") to only the first user's friends, the IP addresses and/or online user profiles associated with such friends being indicated in a command which is associated with the tag "friends". This way, the first user does not inadvertently give away their knowledge of the enemy flank to the enemies. As will be appreciated by persons skilled in the art, a given tag may be associated with one or more phrases (by virtue of the first association data) and one or more commands (by virtue of the second association data). Turning back to the TDM example, the tag "1" may cause the phrase "the enemies are flanking" to only be sent the first user's friends, for example. Optionally, the command data may also be used in order to transmit an appellation to the other user(s). In the case where only one other user is to receive the phrase(s), that other user's name may be transmitted in succession with the phrase(s); "the enemies are flanking, Eden", for example. Similarly, for a plurality of other users, their names may be transmitted in succession with the phrase(s), or some other (preferably shorter) appellation may be used; "Ali, Tom, the enemies are flanking", or "the enemies are flanking, friends", for example.

Similarly with the phrase data, tag data and first association data, the command data and second association data may be predefined or user-provided, and may be optionally adapted by the first user via their user input device. Thus, the aforementioned generating unit and adapting unit may be configured to respectively generate and adapt, responsive to one or more user inputs, one or more of the command data and second association data, where input unit 204 may be configured to receive the user inputs.

In any case, the data stored in storage unit 202 may be an extensive library of phrases and associated tags, which would thus allow the stored data to be used alongside a wider range of video games and/or conversational situations/topics of conversation, for example. Alternatively, the data stored in storage unit 202 may comprise several databases, where a given database comprises phrases (and optionally commands) and associated tags that are more semantically appropriate for a given video game played by the first user (such as the FPS game previously mentioned) or a given conversational situation/topic of conversation (such as talking to a given other user for the first time), Table 1 providing a non-limiting example of the former.

At least some of the data stored in storage unit 202 may be displayed to the first user. As a non-limiting example, the first user may toggle the display of the stored data by providing a predefined user input from their input device to input unit 204, the predefined user input being, say, a button press, key stroke, motion gesture captured using a camera and/or inertial sensor, audio (voice) signal, or the like. In order to display such data, one or more processors (which may be one or more CPUs 20 and/or one or more GPUs 30, for example) may be configured to render, for display, at least some of the stored data responsive to the predefined user input being received by input unit 204.

Displaying this at least some of the stored data may enable the first user to learn which tags (that is, which words must be spoken by the first user) are associated with (and thus subsequently trigger the transmission of) which phrases.

In any case, and as will be appreciated by persons skilled in the art, the stored data is utilised in order to transmit certain phrases to one or more of the other users responsive to tags associated with those certain phrases being spoken by the first user.

### Audio Signals

In embodiments of the present description, it is desirable to receive the sounds generated by the first user (such as noises, speech, or the like), as such sounds may comprise one or more spoken "easier" (parts of) words/phrases, which are to be used to trigger the transmission of the "more difficult" words/phrases on the first user's behalf.

Therefore, in embodiments of the present description, input unit 204 (which may be may be one or more data ports 60, such as USB ports, Ethernet ^{®} ports, WiFi ^{®} ports, Bluetooth ^{®} ports, or the like) is configured to receive one or more audio signals from the at least first user. As previously mentioned, audio signals may be received from one or more microphones and/or other transducers capable of converting sound into an audio signal, for example. The microphones and/or transducers may be located proximate to the user, such as, say, within the same room as the first user, disposed upon/affixed to the first user, disposed upon/affixed to the user input device of the first user, disposed upon/affixed to a display device of the first user, or the like. In any case, the audio signals received by the input unit 204 are received from the first user, and ideally correspond to sounds that are generated by the first user, such as noises, speech, or the like.

### Speech Recognition

In embodiments of the present description, it is desirable to recognise the (parts of) words spoken by the first user once the audio signals are received, as one or more of such spoken (parts of) words may be one or more of the "easier" (parts of) words/phrases which are to be used to trigger the transmission of the "more difficult" words/phrases on the first user's behalf. As will be appreciated by persons skilled in the art, in order to recognise (parts of) spoken words comprised within audio signals, one or more computer-implemented speech recognition algorithms, softwares, models, or the like, may be used. Examples of speech recognition algorithms, softwares, models, or the like, include hidden Markov models, dynamic time warping, neural networks, deep learning, and the like.

Therefore, in embodiments of the present description, recognition unit 206 (which may be one or more CPUs 20 and/or one or more GPUs 30) is configured (for example, using suitable software instruction) to recognise one or more spoken words comprised within the received audio signals. It should be noted that recognition unit 206 is not limited to recognising words only in their entirety, but may also recognise parts of spoken words such as syllables, phonemes, or the like.

Turning back to the TDM example, the first user, wishing to inform their teammates that some of the enemies are attempting a flank, may say the word "one" into the microphone/transducer knowing that this word corresponds to a tag that is associated with the phrase "the enemies are flanking". The audio signal received from the microphone/transducer may comprise the spoken word "one". Recognition unit 206 subsequently analyses the received audio signal in order to recognise any spoken words that are comprised therein. In this example, recognition unit 206 recognises the spoken word "one" comprised within the received audio signal.

### Tags and Phrases

In embodiments of the present description, it is desirable to find out whether each of the recognised spoken (parts of) words corresponds to a tag (that is, one of the "easier" words/phrases) and subsequently transmit, to the other users, the phrase(s) associated with that tag in the event that at least one of the spoken words is found to correspond with that tag. Such an event can be thought of as a trigger event which causes the aforementioned phrase(s) to be transmitted to the other users.

Therefore, in embodiments of the present description, evaluation unit 208 (which may be one or more CPUs 20 and/or one or more GPUs 30) is configured to evaluate whether a given recognised spoken word corresponds to a given tag. Moreover, if the given recognised spoken word corresponds to the given tag, transmission unit 210 (which may be may be one or more data ports 60, such as USB ports, Ethernet ^{®} ports, WiFi ^{®} ports, Bluetooth ^{®} ports, or the like) is configured to transmit one or more of the phrases associated with the given tag to one or more of the other users.

Turning back to the TDM example, evaluation unit 208 evaluates whether the recognised spoken word of "one" corresponds to any of the tags comprised within, say, the stored data represented by Table 1, for example, and in doing so finds that the recognised spoken word "one" corresponds to the tag "one" (or "1"). Subsequently, transmission unit 210 transmits the phrase(s) associated with the tag "one" (namely, "the enemies are flanking") to one or more of the other users.

The one or more of the other users to whom the phrase(s) are transmitted may be selected using the communication settings of the network via which the first user communicates with the other users. Turning back to the TDM example, the FPS game may have an in-game VoIP (or other) chat, and the first user may be able to select the recipients of the phrase(s) by changing the communication settings from an "all players in current game" setting, to a "teammates only" setting, a "squad only" setting, a "friends currently playing" setting, or the like, thereby allowing the first user to not inadvertently give away their knowledge of the enemy flank to the enemies. In the context of videoconferencing, the user may be able to select the desired recipients of the phrase(s) using analogous communication settings.

Certain video games may comprise a so-called "proximity chat" feature, where a first user may be allowed to communicate with a second user (via VoIP, instant messaging, or the like) when the distance between the in-game characters representing the first and second users in the video game's virtual environment is less than a threshold distance. For those video games, the one or more of the other users to whom the phrase(s) are transmitted may be those other users whose in-game characters fall within a threshold distance of the first user's in-game character. Moreover, such distance-based transmission of phrase(s) may be employed in video games that do not themselves possess a proximity chat functionality. This shall be discussed later herein.

Optionally, evaluation unit 208 may be configured to evaluate whether a given other recognised spoken word corresponds to a given other tag; and if so, the transmission unit 210 may be configured to transmit one or more of the phrases associated with the given tag to one or more of the subsets of others users associated with the given other tag.

As will be appreciated by persons skilled in the art, the given other tag may thus be a tag that is associated with one or more commands (by virtue of the second association data). As such, the given other tag may or may not coincide with the given tag; as previously mentioned with respect to the FPS game, the tag "1" may cause the phrase "the enemies are flanking" to only be sent the first user's friends (and thus the given tag and given other tag may coincide with each other), or a tag different to "1" (such as "friends" may be used (and thus the given tag and given other tag may not coincide with each other). In any case, the recipients of the phrase(s) to be transmitted may be specified by the first user through saying one or more tags.

In the event that more than one phrase is associated with the given tag (to which the given recognised spoken given word was found to correspond), transmission unit 210 may transmit the multiple phrases in succession. Turning back to the aforementioned example of the tag of "1" being associated with the phrases "the enemies are flanking" and "I'm under heavy fire", both phrases may be transmitted in succession to one or more of the other users. Should the first user only wish to transmit one of the phrases associated with a given tag, the first user may adapt the stored data. For example, the first may adapt the stored data represented by Table 1 such that it now resembles the data represented by Table 2:

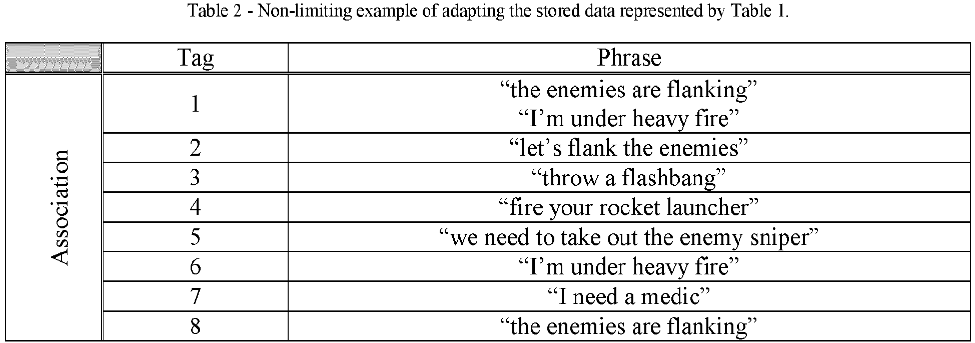

Thus, as can be seen from Table 2, a tag of "one" may trigger the transmission of the phrases "the enemies are flanking" and "I'm under heavy fire", whereas the tag of "six" may only trigger the transmission of the phrase "I'm under heavy fire", and the tag of "eight" may only trigger the transmission of the phrase "the enemies are flanking". As will be appreciated by persons skilled in the art, should such data be employed, a similar methodology may be utilised with respect to the command data and second association data if there are any one-to-many associations between tags and commands.

As will be appreciated by persons skilled in the art, such adaptations may cause an increase in the number of phrases, tags and associations that are stored in storage unit 202, which in turn may cause the certain inconveniences for the first user. For example, the first user may have experience difficulty in trying to learn and/or memorise a greater number of phrases, tags and/or associations. As another example, the display of a greater number of the phrases, tags and associations (in order to learn and/or memorise them, for example) may cause a greater proportion of the first user's display screen (on which, say, a video game, videoconference, or the like) to be occluded by the displayed phrases (and optionally commands), tags and associations. Techniques and methods to alleviate or mitigate this issue shall be discussed later herein.

Optionally one or more tags may correspond to non-verbal input data as well as or instead of at least part of one word. This may enable a user for example to tap out a sequence on a controller touchpad (for example a number of taps to indicate numbers, and/or a coded sequence such as, by way of a non-limiting example, Morse code, to indicate letters) to evoke a tag in a similar manner to that described elsewhere herein for utterances. This may assist where a user's speech is such that a corresponding tag cannot be reliable recognised, or causes the user discomfort or strain to utter. Optionally a user may assign non-verbal inputs in association with or in lieu of spoken tags to assist in this manner.

### Phrase and/or Recipient Selection

In embodiments of the present description, it may be desirable to make the use of phrases, tags and/or associations more convenient for the first user. As previously mentioned with respect to Table 2, large amounts of phrases, tags and/or associations may make their use more difficult for the first user; the first user may find learning and/or memorising this large amount of information more difficult, and/or the display of this larger amount of information may cause a greater proportion of the first user's display screen (which may be displaying, say, a video game) to be occluded.

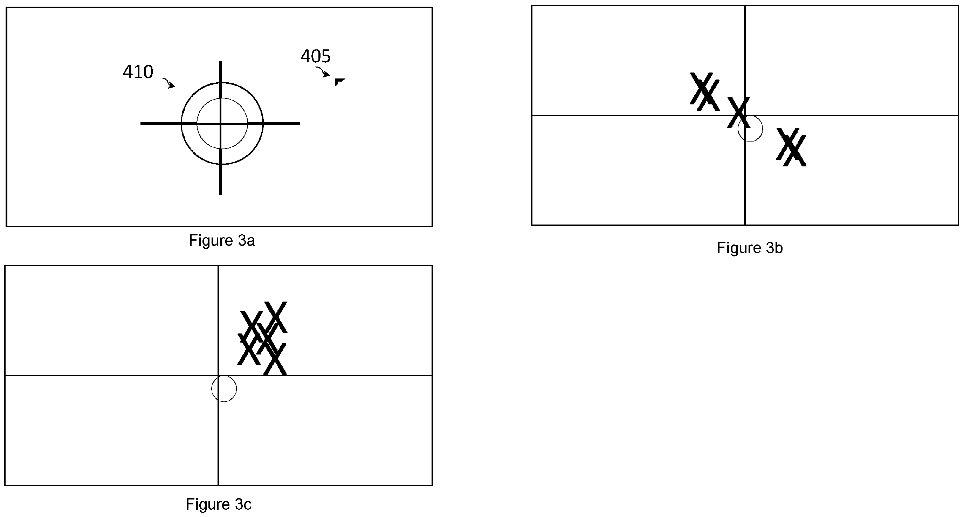

Accordingly, turning now to figure 3, in which parts 300-310 correspond to parts 200-210 of figure 2 except where stated otherwise, speech assistance apparatus 300 may comprise selecting unit 312, which may be one or more CPUs 20 and/or one or more GPUs 30, and which may be configured to, if the given recognised spoken word corresponds to the given tag, select, based on game data corresponding to a video game being played by the at least first user, one or more of the phrases associated with the given tag and/or one or more of the other users.

Where embodiments of the present description do not correspond to that of an entertainment device 10 (such as a computer, a video game console, or the like), and/or where embodiments of the present description do not execute the video game being played by the first user, input unit 302 may be configured to receive the game data. Alternatively, where embodiments of the present description do correspond to that of an entertainment device 10, and/or where embodiments of the present description do execute the video game being played by the first user, the game data may be obtained from the one or more CPUs 20, one or more GPUs 30, or the like, and/or any associated memory such as RAM 40, SSD 50, or the like. In any case, and as will be appreciated by persons skilled in the art, the game data may be utilised by selecting unit 312 in order to select the phrase(s) that are to be transmitted on the first user's behalf and/or which of the other users are to receive the phrase(s).

Regarding the use of game data as basis for phrase selection, a given tag may be associated with a larger number (say, 5, 10, 15, 20, 30, 40, 50, 100, or the like) of phrases, and, responsive to the given tag being spoken by the first user, the appropriate phrase(s) are selected therefrom by selecting unit 312 depending on the type of (or context within) the video game being played by the first user. In order to make such one-to-many associations more convenient for the first user, the phrase(s) associated with a given tag may be synonymous or otherwise semantically related with each other. For example, the tag of "1" may be associated with phrases such as "attack", "charge", "fire artillery", "loose your arrow", "shoot your gun", "throw your knife", "swing your sword", and the like, for example; all these phrases may be considered semantically related in that they are all orders to assault one or more enemies. Carrying on with this example, the tag of "X" may be associated with phrases such as "retreat", "fall back", "run for your lives", "lay low", "hide", and the like, for example; all these phrases may be considered semantically related in that they are all orders to evade one or more enemies. Moreover, the first association data may comprise an indication of how the phrase(s) associated with a given tag are related to each other. Thus, the first user may only need to learn/remember/read from displayed information that saying the word "one" will trigger the transmission of one or more phrases semantically related to the word "assault", and that "X" triggers the transmission of phrase(s) related to "evade", thereby making the use of phrases, tags and associations therebetween more convenient for the first user. As a non-limiting example, in response to the first user saying the tag "one" during a fantasy role-playing game (RPG), selecting unit 312 may select the phrase "loose your arrow", as the recipient - which may have been chosen through use of evaluation unit 208, 308 and transmission unit 210, 310 (after being suitably configured to utilise command data and second association data), or through use of selection unit 312 (as will be discussed later herein) - may be wielding a bow and arrow.

Regarding the use of game data as basis for recipient selection (that is, the selection of other users to whom phrase(s) are to be transmitted), once phrase(s) to be transmitted have been found - whether through use of evaluation unit 208, 308 and transmission unit 210, 310 (which may be more appropriately used in the case of a one-to-one association between a phrase and a tag), or whether through use of selection unit 312 (which may be more appropriately used in the case of a one-to-many association between multiple phrases and a tag) - selecting unit 312 may select which of the other users to whom these phrases are to be transmitted. As a non-limiting example, methodologies similar to the aforementioned "proximity chat" functionality may be employed, where other users (allies and/or enemies in an FPS game, for example) may be selected by selecting unit 312 as recipients of the phrase(s) in dependence upon whether the other users are within a threshold distance of the first user during a threshold period of time subsequent to, say, the audio signal being received by input unit 204, 304, for example.

As mentioned previously, selecting unit 312 may be used for phrase selection only, recipient selection only, or both phrase and recipient selection. Moreover, it should be noted that where selecting unit 312 is only employed for phrase selection, the recipient selection may be carried out in the previously described manner, namely that of utilising command data, tag data and second association data. Similarly, where selecting unit 312 is only employed for recipient selection, the phrase selection may be carried out in the previously described manner, namely that of utilising phrase data, tag data and first association data.

Further examples of the types of information which may be comprised within game data, and how such types of the information may be utilised for phrase and/or recipient selection, are discussed below. It should be noted that any combination of the following types of information may be used. Moreover, it should be noted that the following examples are not exhaustive; persons skilled in the art will appreciate that game data may comprise types of information other than those mentioned hereinafter.

Firstly, the game data may comprise character information corresponding to a type of in-game character being controlled by the at least first user and/or a type of in-game character being controlled by each of the one or more other users. Turning back to the fantasy RPG example, the first user may say the tag "one" (which may be associated with phrases related to assaulting one or more enemies), and selecting unit 312 may select the phrases "cast an attacking spell" and "summon lightning", as one or more of the recipients (which may or may not have been selected by selecting unit 312) are playing the game as a wizard, warlock, witch, or the like, and one more of the recipients are playing as a demi-god, all of which may be known from the character information.

Alternatively or in addition, selecting unit 312 may select one or more of the other users by using the character information, however it should be noted that doing so may require the use of the data stored in storage unit 202, 302. As a non-limiting example, in order to only select other users who are playing as combative types of in-game characters (such as, wizards, demi-gods, elves, dwarves, knights, paladin, for example) so that these users may receive the phrase(s) related to assaulting enemies, selecting unit 312 may detect from the first association data that the tag "1" is associated with phrase(s) related to assaulting the enemy; the first association data may comprise an indication of how the phrase(s) associated with a given tag are related to each other. Thus, in response to the first user saying "one", selecting unit 312 may detect that the phrase(s) associated with the tag "1" are related in that they are all orders to attack, and then only select the other users that are playing as combative types of in-game characters, as opposed to non-combative types of in-game character (such as apothecaries, alchemists, scholars, priests, spies, and the like), who are either unable to perform assaulting actions, or may do so but very ineffectively. Hence, more generally, if the given recognised spoken word corresponds to the given tag, selecting unit 312 may be configured to select one or more of the other users in dependence upon at least one of phrase data, tag data, and first association data.

Alternatively or in addition, selecting unit 312 may select phrase(s) and/or recipient(s) based on the type of character being controlled by the first user; the phrase "cast a hex" may be selected instead of aforementioned phrase of "cast an attacking spell" and/or the other users selected may only be wizards if the first user's character is a wizard rather than a knight, as a non-limiting example.

Secondly, the game data may comprise location information corresponding to a location of one or more in-game characters and/or one or more in-game objects within a virtual environment of the video game. As a non-limiting example of phrase selection, phrase(s) related to a request for healing may associated with the tag "A", and in the event that the first user says "A", selecting unit 312 may select the phrase "help me up" if another user's character is within a threshold distance away from the first user's character, or may otherwise select a "I NEED FIRST AID!" phrase. Alternatively or in addition to phrase selection, only those users' characters that are within a threshold distance of the first user's character and/or are within a threshold distance of a medical supplies cache may be selected to receive the phrase(s), as a non-limiting example. As another non-limiting example, the first user may be within a threshold distance from a car, and phrase(s) related to evading enemies are associated with the tag "X". When the first user says "X", selecting unit 312 may select the phrase "let's drive away" and/or select other users whose characters are within a threshold distance from the car, for example.

Thirdly, the game data may comprise visibility information corresponding to a visibility of one or more in-game characters and/or one or more in-game objects from a viewpoint of a virtual camera associated with the first user, the virtual camera being disposed within a virtual environment of the video game. As will be appreciated by persons skilled in the art, the virtual camera may or may not be controlled by the first user; FPS games providing typical examples of user-controlled virtual cameras, and 2D platforming games providing typical examples of non-user-controlled virtual cameras. As a non-limiting example of phrase selection, phrase(s) relating to greeting other users may be associated with the tag "greet", and one or more such phrases (for example, "hello" and/or "how are you?") may only be selected if one or more other users (friends and/or foes) are visible to the first user. As another non-limiting example of phrase selection, phrase(s) relating to interacting with objects may be associated with the tag "blue", and a sword may be lying on the ground and may be visible from the first user's point of view. If the user says "blue", selecting unit 312 may select the phrase "grab that sword" for transmission to recipients (which may or may not be visible from the first user's point of view). Alternatively or in addition to phrase selection, one or more of the other users whose character is visible from the first user's point of view may be selected as the recipients of phrase(s).

Fourthly, the game data may comprise interaction information corresponding to one or more in-game characters and/or in-game objects with which the at least first user, either prior to or concurrently with the audio signals being received by the input unit, has been interacting. As a non-limiting example of phrase selection, phrase(s) relating to quips and witty one-liners may be associated with the tag "jest", and the first user may have successfully defeated an enemy character. The first user may subsequently say "jest", and selecting unit 312 may select the phrase "That was too easy!" based on the prior interaction (battle) between the first user's character and the enemy character. As another non-limiting example, phrase(s) relating to discovering objects may be associated with the tag "green", and the first user may have picked up a precious gem. The first user may subsequently say "green", and selecting unit 312 may select the phrase "I found a gemstone" based on the interaction between the first user's character and the precious gem. As a non-limiting example of recipient selection, the first user's character may be healing a wounded teammate. Based on this interaction (healing), selecting unit 312 may select the wounded teammate as the recipient of whichever phrase(s) are to be transmitted.

Fifthly, the game data may comprise profile information corresponding to a gaming profile of the at least first user and/or to a gaming profile of each of the other users. As a non-limiting example of phrase selection, phrase(s) relating to assaulting enemies may be associated with the tag of "1". The first user may say "one", and selecting unit 312 may select the phrase "I'm going after that goblin" (as opposed to, say, "I'm going to kill that goblin") based on profile information of the other users indicating that the ages of the other users are, say, under 12. As a non-limiting example of recipient selection, phrase(s) relating to small talk may be associated with the tag "Z". The first user may say "Z", and selecting unit 312 may select one or more other users as the recipients based on profile information indicating that the one or more other users are friends with the first user, and based on an indication that the phrase(s) associated with the tag "Z" relate to small talk - as mentioned previously with respect to character information, selecting unit 312 may be configured to select one or more of the other users in dependence upon at least one of phrase data, tag data, and first association data.

Sixthly, the game data may comprise objective information corresponding to an in-game objective associated with the least first user and/or an in-game objective associated with each of the one or more other users. As a non-limiting example of phrase selection, phrase(s) relating to strategies and tactics may be associated with the tag "10", and the first user (and optionally their teammates) may have an objective to capture base A, as it is currently captured by an enemy team. The first user may subsequently say "ten", and selecting unit 312 may select the phrase "we need to capture base A!" based on the objective information. As a non-limiting example of recipient selection, selecting unit 312 may select those other users that share a common objective with the first user, such as teammates or squad mates.

Seventhly, the game data may comprise proficiency information corresponding to a proficiency with which the at least first user plays the video game and/or a proficiency with which each of the one or more users play the video game. As a non-limiting example of phrase selection, phrase(s) relating to advice, tips and tricks may be associated with the tag "brown". The first user may subsequently say "brown", and selecting unit 312 may select the phrase "perform a spinning attack" (as opposed to the phrase "perform a lunging attack") based on the proficiency information indicating that the recipient of the phrase is very good at the game; the other user was won a lot of matches, has a high experience ("XP") level, or the like. As a non-limiting example of recipient selection, selecting unit 312 may select those other users that have an above-threshold proficiency level.

Eightly, the game data may comprise identifying information indicating at least one of a type of the video game, a category of the video game, and a genre of the video game. As a non-limiting example of phrase selection, phrase(s) relating to assaulting an enemy may be associated with the tag "1". The first user may subsequently say "one", and selecting unit 312 may select the phrase "shoot" (as opposed to "swing your mace") based on the identifying information (such as video game metadata) indicating that the video game is an FPS game (as opposed to a fantasy RPG). As a non-limiting example of recipient selection, selecting unit 312 may select those other users that are playing and/or spectating the video game that the first user is playing.

As mentioned previously any combination of the preceding examples are considered within the scope of the present description. In a case where selecting unit 312 may be used to select both phrases(s) and recipient(s), the phrase selection may be carried out based on character information, and the recipient selection may be carried out based on location information, as a non-limiting example. Moreover, it should be noted that these types of information are not necessarily distinct from each other. For example, one or more types of information may be comprised within a different type of information. As a non-limiting example, proficiency information may be comprised within profile information, as profile information typically includes information regarding the achievements (or "trophies") a given user has unlocked (or completed) for a given video game.

As will be appreciated by persons skilled in the art, selecting unit 312 may thus enable the first user to transmit the "more difficult" phrases in a more convenient manner. For example, the first user may only have to learn and/or memorise a small number of tags, and, responsive to one of these tags being spoken by the first user, the most appropriate phrase(s) associated with that tag (that is, the most appropriate phrase(s) in light of the current type and/or context of the video game being played by the first user) are selected and subsequently transmitted to one or more of the other users on the first user's behalf.

It will be appreciated that tag and phrase data, and any combination of game data examples and described elsewhere herein, may be provided with a game, and the operation of the method herein may be implemented either within the game itself or by an operating system of the host device or a helper app thereof.

Similarly, for legacy games that were not initially provided with such tag and phrase data, such data may be created and in embodiments of the description the host device or an administrative server to which the host device connects may detect that such a legacy game is installed on the host device and supply the appropriate tag and phrase data for that game.

Optionally any contextual information, to provide contextual phrasing, may be determined for such a legacy game based on indicators of game progress that the operating system or helper app can monitor; for example a list of game assets associated with certain legacy game events can be monitored so that if the texture of a particular boss is accessed by the game, then the system or helper app can chose a phrase appropriate to fighting that boos; similarly when music for a particular game level is accessed, then phases appropriate to that leve can be accessed, and the like. Hence more generally the system herein can be retro-fitted to legacy games by detecting that the game is installed and obtaining corresponding tag and phrase data that has been subsequently created for it, and optionally obtaining trigger data for context sensitive phrases that indicates a particular context based upon the detection of access to one or more game assets by the game.

### Speech assistance method

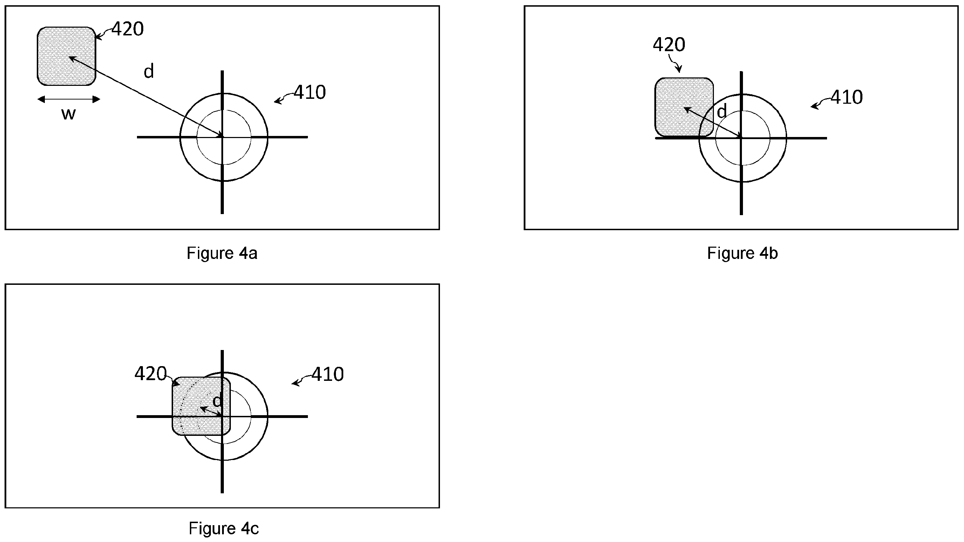

Turning now to figure 4, a method of assisting at least a first user in communicating with one or more other users via a network comprises the steps of:
Step S100: storing:
   - phrase data corresponding to one or more phrases, wherein each phrase comprises one or more words,
   - tag data corresponding to one or more tags, wherein each tag comprises at least part of one word, and
   - first association data corresponding to one or more associations between one or more of the phrases and one or more of the tags,
   as described elsewhere herein.
Step S102: receiving one or more audio signals from the at least first user, as described elsewhere herein.
Step S104: recognising one or more spoken words comprised within the received audio signals, as described elsewhere herein.
Step S106: evaluating whether a given recognised spoken word corresponds to a given tag, as described elsewhere herein.
Step S108: if the recognised spoken word corresponds to the given tag, transmitting one or more of the phrases associated with the given tag to one or more of the other users, as described elsewhere herein.

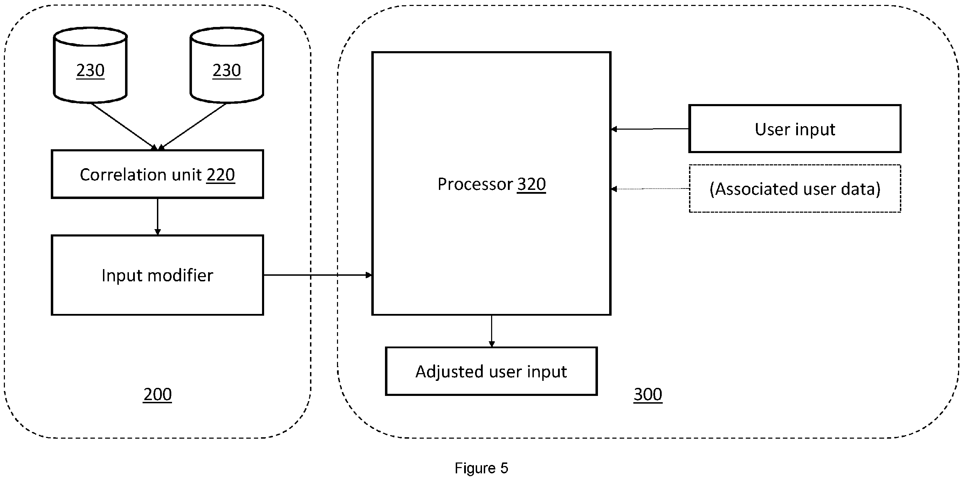

Turning now to figure 5, in which steps S200-S206 and S210 correspond to steps S100-S108 of figure 4 except where stated otherwise, the speech assistance method may similarly comprise the following additional step:
Step S208: if the recognised spoken word corresponds to the given tag, selecting, based on game data corresponding to a video game being played by the at least first user, one or more of the phrases associated with the given tag and/or one or more of the other users, as described elsewhere herein.

It will be apparent to a person skilled in the art that variations in the above method corresponding to operation of the various embodiments of the apparatus as described and claimed herein are considered within the scope of the present invention.

It will be appreciated that the above methods may be carried out on conventional hardware (such as entertainment device 10) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An apparatus for assisting at least a first user in communicating with one or more other users via a network, the apparatus comprising:
a storage unit configured to store:
phrase data corresponding to one or more phrases, wherein each phrase comprises one or more words,
tag data corresponding to one or more tags, wherein each tag comprises at least part of one word, and
first association data corresponding to one or more associations between one or more of the phrases and one or more of the tags;
an input unit configured to receive one or more audio signals from the at least first user;
a recognition unit configured to recognise one or more spoken words comprised within the received audio signals;
an evaluation unit configured to evaluate whether a given recognised spoken word corresponds to a given tag; and
if so,
a transmission unit configured to transmit one or more of the phrases associated with the given tag to one or more of the other users.

2. An apparatus according to claim 1, wherein:
the storage unit is configured to store:
command data corresponding to one or more commands, wherein each command comprises an indication of a respective subset of the other users, and
second association data corresponding to one or more associations between one or more of the commands and one or more of the tags;
the evaluation unit is configured to evaluate whether a given other recognised spoken word corresponds to a given other tag; and
if so,
the transmission unit is configured to transmit one or more of the phrases associated with the given tag to one or more of the subsets of others users associated with the given other tag.

3. An apparatus according to claim 1, comprising:
a selecting unit configured to,
if the given recognised spoken word corresponds to the given tag,
select, based on game data corresponding to a video game being played by the at least first user, one or more of the phrases associated with the given tag and/or one or more of the other users.

4. An apparatus according to claim 3, wherein the game data comprises one or more selected from the list consisting of:
i. character information corresponding to a type of in-game character being controlled by the at least first user and/or a type of in-game character being controlled by each of the one or more other users;
ii. location information corresponding to a location of one or more in-game characters and/or one or more in-game objects within a virtual environment of the video game;
iii. visibility information corresponding to a visibility of one or more in-game characters and/or one or more in-game objects from a viewpoint of a virtual camera associated with the first user;
iv. interaction information corresponding to one or more in-game characters and/or in-game objects with which the at least first user, either prior to or concurrently with the audio signals being received by the input unit, has been interacting;
v. objective information corresponding to an in-game objective associated with the least first user and/or an in-game objective associated with each of the one or more other users; and
vi. identifying information indicating at least one of a type of the video game, a category of the video game, and a genre of the video game.

5. An apparatus according to any one of claims 3 to 4, wherein the game data comprises one or more selected from the list consisting of:
i. profile information corresponding to a gaming profile of the at least first user and/or to a gaming profile of each of the other users; and
ii. proficiency information corresponding to a proficiency with which the at least first user plays the video game and/or a proficiency with which each of the one or more users play the video game.

6. A method of assisting at least a first user in communicating with one or more other users via a network, the method comprising the steps of:
storing:
phrase data corresponding to one or more phrases, wherein each phrase comprises one or more words,
tag data corresponding to one or more tags, wherein each tag comprises at least part of one word, and
first association data corresponding to one or more associations between one or more of the phrases and one or more of the tags;
receiving one or more audio signals from the at least first user;
recognising one or more spoken words comprised within the received audio signals;
evaluating whether a given recognised spoken word corresponds to a given tag; and
if so,
transmitting one or more of the phrases associated with the given tag to one or more of the other users.

7. A method according to claim 6, wherein:
the storing step comprises storing:
command data corresponding to one or more commands, wherein each command comprises an indication of a respective subset of the other users, and
second association data corresponding to one or more associations between one or more of the commands and one or more of the tags;
the evaluating step comprises evaluating whether a given other recognised spoken word corresponds to a given other tag; and
if so,
the transmitting step comprises transmitting one or more of the phrases associated with the given tag to one or more of the subsets of others users associated with the given other tag.

8. A method according to claim 6, comprising the step of:
if the given recognised spoken word corresponds to the given tag,
selecting, based on game data corresponding to a video game being played by the at least first user, one or more of the phrases associated with the given tag and/or one or more of the other users.

9. A method according to claim 8, wherein the game data comprises one or more selected from the list consisting of:
i. character information corresponding to a type of in-game character being controlled by the at least first user and/or a type of in-game character being controlled by each of the one or more other users;
ii. location information corresponding to a location of one or more in-game characters and/or one or more in-game objects within a virtual environment of the video game;
iii. visibility information corresponding to a visibility of one or more in-game characters and/or one or more in-game objects from a viewpoint of a virtual camera associated with the first user;
iv. interaction information corresponding to one or more in-game characters and/or in-game objects with which the at least first user, either prior to or concurrently with the audio signals being received by the input unit, has been interacting;
v. objective information corresponding to an in-game objective associated with the least first user and/or an in-game objective associated with each of the one or more other users; and
vi. identifying information indicating at least one of a type of the video game, a category of the video game, and a genre of the video game.

10. A method according to claim 8 or claim 9, wherein the game data comprises one or more selected from the list consisting of:
i. profile information corresponding to a gaming profile of the at least first user and/or to a gaming profile of each of the other users; and
ii. proficiency information corresponding to a proficiency with which the at least first user plays the video game and/or a proficiency with which each of the one or more users play the video game.

11. A computer program comprising computer executable instructions adapted to cause a computer system to perform any one of the methods of claims 6 to 10.

12. A non-transitory, computer-readable storage medium having stored thereon the computer program of claim 11.
